# EUROPÄISCHE PATENTSCHRIFT

(11) **EP 1 932 423 B1**
(45) Veröffentlichungstag und Bekanntmachung des Hinweises auf die Patenterteilung: **05.04.2017**
(21) Anmeldenummer: 07023621.1
(22) Anmeldetag: 06.12.2007
(51) Int. Cl.: A01M 7/00

(54) **Spritzeinrichtung**
Spraying device
Dispositif de pulvérisation

(30) Priorität: 15.12.2006 DE 102006059193
(43) Veröffentlichungstag der Anmeldung: 18.06.2008
(73) Patentinhaber: Amazonen-Werke H. Dreyer GmbH & Co. KG, 49205 Hasbergen (DE)
(72) Erfinder: Herberg, Friedrich, Dr. Ing., 40789 Monheim-Bamberg (DE); Kolvenbach, Heiner, Dr. Ing., 52072 Aachen (DE)

(56) Entgegenhaltungen:
- EP-A- 1 749 443
- GB-A- 2 048 091
- US-A- 5 310 113

## Beschreibung

Die Erfindung betrifft eine Spritzeinrichtung gemäß dem Oberbegriff des Patentanspruches 1.

Eine derartige Spritzeinrichtung ist beispielsweise in der US-A-5, 310, 113 beschrieben (siehe auch z.B. DE-A-10 2004 047 585).

Diese Spritzvorrichtung weist einen Trägerflüssigkeitsbehälter auf, in dem als Trägerflüssigkeit Wasser oder Flüssigdünger enthalten isc. Über eine Förderpumpe wird die Trägerflüssigkeit den Spritzdüsen und über eine Zirkulationspumpe wird den Spritzdüsen in getrennter Weise der Wirkstoff aus einem Wirkstoffvorbehälter zugeleitet. Somit wird der Wirkstoff erst unmittelbar an den Spritzdüsen in die Trägerflüssigkeit eingespeist, mit ihr vermischt und dann das Wirkstoffmittel mit der Trägerflüssigkeit in vermischter Weise über die Spritzdüsen ausgebracht.

In einer ersten Ausführung kann das in dem Wirkstoffvorbehälter eingefüllte Wirkstoffmittel unverdünnt aus dem Wirkstoffvorratsbehälter über eine Zulaufleitung eingefüllt werden. Das Nachfüllen des Wirkstoffmittels aus dem Wirkstoffvorratsbehälter in den Wirkstoffvorbehälter wird über einen minimalen Füllstandssensor und einem maximalen Füllstandssensor, die an dem Wirkstoffvorbehälter angeordnet sind, bestimmt. Diese beiden Sensoren steuern ein Zulaufventil an, welches sich in der Zulaufleitung, die zwischen dem Wirkstoffvorratsbehälter und dem Wirkstoffvorbehälter angeordnet ist, befindet.

Des Weiteren ist ein sog. Vorverdünnungsbetrieb möglich. Hierzu wird dann über eine Vorverdünnungspumpe Wirkstoff und Trägerflüssigkeit in einem bestimmten Verhältnis zueinander in den Wirkstoffvorbehälter geleitet, so dass der Wirkstoff vorverdünnt in den Wirkstoffvorbehälter gelangt.

Aus diesem Wirkstoffvorbehälter saugt die Zirkulationspumpe dann das vorverdünnte oder unverdünnte Wirkstoffmittel an. Es ist also immer eine bestimmte Wirkstoffmittelmenge oder vorverdünnte Wirkstoffmittelmenge in dem Wirkstoffvorbehälter vorhanden. Der Inhalt dieses Behälters muss nach Beendigung der Ausbringarbeit entsorgt werden. Es muss auch immer wesentlich mehr Wirkstoff vorverdünnt werden als tatsächlich für das Ausbringen benötigt wird.

Der Erfindung liegt die Aufgabe zugrunde, in einfacher Weise möglichst geringe Wirkstoffmengen in dem Spritzsystem zwischen dem jeweiligen Wirkstofftank und den Spritzdüsen in den Leitungen mit ausreichender Fließfähigkeit vorzuhalten und die Möglichkeit zu schaffen, den ausgebrachten Volumenstrom an Wirkstoffmittel dem jeweiligen Bedarf schnell anpassen zu können.

Diese Aufgabe wird erfindungsgemäß dadurch gelöst (siehe Anspruch 1), dass zumindest ein Wirkstoff in einem vor Arbeitsbeginn bestgelegten und eingestellten konstanten Mengenverhältnis zur Trägerflüssigkeit zunächst zur Vorverdünnung in zumindest eine unter Druck stehende Bypassleitung der Trägerflüssigkeit mittels zumindest einer Pumpe einspeisbar ist, dass die zumindest eine das zumindest mit der Trägerflüssigkeit vorverdünnte und unter Druck stehende Wirkstoffmittel enthaltende Bypassleitung in die zumindest eine zu den Spritzdüsen führende Trägerflüssigkeitsleitung mündet. Infolge dieser Maßnahme wird kontinuierlich nur so viel Wirkstoffmittel mit der Trägerflüssigkeit vorverdünnt und gleichzeitig in das Spritzsystem eingespeist, wie tatsächlich benötigt wird. Es erfolgt keine absatzweise Vorverdünnung des Trägermittels in einem separaten Vorratsbehälter. Vielmehr wird das Wirkstoffmittel während des Spritzvorganges kontinuierlich in eine unter Druck stehende Trägerflüssigkeit führende Bypassleitung zur Vorverdünnung eingespeist. Die das vorverdünnte Wirkstoffmittel führende Bypassleitung mündet in die zu den Spritzdüsen führenden Trägerflüssigkeitsleitung, in welcher dann die endgültige Trägerflüssigkeitswirkstoffmittelkonzentration zur Herstellung der Spritzbrühe, welche über die Spritzdüsen ausgebracht wird, in mischender Waise hergestellt wird

Das Wirkstoffmittel wird zur Vorverdünnung über eine Dosierpumpe in die Trägerflüssigkeit enthaltende und unter Druck stehende Bypassleitung eingespeist. Durch diese Vorverdünnungsmethode des Wirkstoffmittels werden die hohen Anforderungen der Umweltsicherheit in einfacher Weise sicher erfüllt. Die Zubereitung der Vorverdünnung mit konstantem Mischverhältnis erfolgt mit dem Volumenstrom, der dem sich aus der momentanen Fahrgeschwindigkeit und der tatsächlichen Arbeitsbreite ergebenden Bedarf entspricht.

Um in einfacher Weise die Wirkstoffmittelmenge entsprechend den Anforderungen, wie Arbeitsbreite, Aufwandmenge und Fahrgeschwindigkeit anpassen zu können, ist vorgesehen, dass in jeder Bypassleitung eine Vorrichtung angeordnet ist, mit der die Strömungsmenge in der jeweiligen Bypassleitung verstellt werden kann.

In folge dieser Maßnahmen lässt sich die gewünschte Konzentration und der Volumenstrom in einfacher Weise einstellen. Hierbei kann die Vorrichtung zur Verstellung der Strömungsmenge ein einstellbares Durchflussventil sein.

Um eine gute Vermischung des Wirkstoffmittels mit der Trägerflüssigkeit zur Erreichung einer homogenen Spritzbrühe zu erreichen, ist vorgesehen, dass an der Stelle, an der die Bypassleitung in die Trägerflüssigkeitsleitung einmündet, in der Trägerflüssigkeitsleitung eine Mischkammer angeordnet ist.

Eine einfache und kontinuierliche Einspeisung des Wirkstoffmittels in die Trägerflüssigkeit der Bypassleitung ist dadurch zu erreichen, dass in der Bypassleitung eine von dem in der Bypassleitung strömenden Flüssigkeitsstrom angetriebene Kraftmaschine angeordnet ist, dass die Kraftmaschine zumindest eine einen Wirkstoff fördernde und in die Bypassleitung einspeisende Pumpe antreibt.

Eine Verwirklichung des Antriebes der Pumpe lässt sich vorteilhaft durch die Merkmale der Ansprüche 6 und 7 in einfacher Weise erreichen.

Die jeweils von der Wirkstoff fördernden Pumpe kommende Wirkstoffleitung kann in Strömungsrichtung gesehen vor oder hinter dem Antriebsmotor in die Bypassleitung einmünden.

Die Einmündung der jeweils von der Wirkstoff fördernden Pumpe kommenden Leitung vor dem Antriebsmotor in die Bypassleitung hat den Vorteil, dass das Wirkstoffmittel in dem Antriebsmotor sehr intensiv mit der Trägerflüssigkeit zu einer homogenen Flüssigkeit vermischt wird. Diese Art der Einspeisung muss hinsichtlich der Dosierungsgenauigkeit bzgl. des Vormiochungsverhältnisses von Wirkstoff zu Trägerflüssigkeit bzgl. eingespeister Wirkstoffmenge berücksichtigt werden. Dies ist nicht erforderlich wenn die jeweils von der Wirkstoff fördernden Pumpe kommende Wirkstoffleitung hinter dem Antriebsmotor hinter die Bypassleitung einmündet. In diesem Falle muss je nach Eigenschaften des Wirkstoffmittels hinsichtlich der Vermischungseigenschaft des Wirkstoffmittels mit der Trägerflüssigkeit evtl. für eine entsprechend gute Vermischung von Wirkstoffmittel mit Trägerflüssigkeit durch geeignete Mittel gesorgt werden.

Um jeder Teilbreite des Spritzsystems die erforderliche Wirkstoffmittelmenge zuführen zu können, ist vorgesehen, dass die Bypassleitung sich hinter dem Antriebsmotor oder dem Durchflusssensor und der Einspeisestelle der zumindest einen Wirkstoffleitung in die Bypassleitung auf eine der Anzahl der Teilbreiten der Spritzbalkenanordnung entsprechende Anzahl von Teilbypassleitungen aufteilt, dass die Trägerflüssigkeitsleitung sich vor der jeder Teilbreite der Spritzbalkenanordnung in zugeordnete Teilbreitenleitungen aufteilt, dass jeweils eine Teilbypassleitung in einer in der Teilbreitenträgerflüssigkeitsleitung angeordneten Mischkammer einmündet, dass in jeder Teilbreitenbypassleitung ein einstellbares Durchflussventil angeordnet ist.

Eine einfache Ausgestaltung der Durchflussventile lässt sich dadurch erreichen, dass die in der Teilbreitenbypassleitung angeordneten Durchflussventile als einstellbare Blenden ausgebildet sind.

Eine weitere einfache Ausgestaltung der Durchflussventile lässt sich dadurch erreichen, dass die in der Teilbreitenbypassleitung angeordneten Durchflussventile als Proportionalblenden oder -drosseln ausgebildet sind.

Um in einfacher Weise die Wirkstoffmittelkonzentration entsprechend den gewünschten Einsatzbehältnissen an die jeweiligen Einsatzbedingungen, wie teilflächenspezifische Bewirtschaftung, Fahrgeschwindigkeit und Arbeitsbreite und erforderlicher Wirkstoffmittelmenge je Flächeneinheit anpassen zu können, ist vorgesehen, dass die in den Bypassleitungen oder den Teilbreitenbypassleitungen angeordneten Durchflussventile über eine elektronische Steuereinrichtung in Abhängigkeit des in der Trägerflüssigkeitsleitung herrschenden Drucks und/oder in Abhängigkeit eines Weg- oder Fahrgeschwindigkeitsignals der sich über der Bodenoberfläche bewegten Spritzeinrichtung und/oder in Abhangigkeit vom jeweils aktuellen, auf die bearbeitete Bodenfläche bezogenen Bedarf an Wirkstoffmittel einstellbar sind.

Der Grundgedanke, der der Erfindung zugrunde liegt, besteht darin, dass eine möglichst kontinuierliche Dosierung sowie eine Fertigmischung von Wirkstoffmitteln mit Trägerflüssigkeit erst im Bereich der Teilbreiten im Verteilergestängebereich erfolgen. Weiterhin wird durch die unmittelbare Anordnung der Dosierpumpe für die unverdünnten Wirkstoffmittel im Bereich des Wirkstoffbehälters und die Einspeisung des Wirkstoffmittels über die Wirkstoffmitteldosierpumpe in die Trägerflüssigkeit der unter Druck stehenden Bypassleitung eine Unterdrucksituation im möglicherweise hochviskosen unverdünnten Wirkstoffmittelbereich vermieden. Durch die erfindungsgemäße Ausgestaltung der kontinuierlichen Einbringung des Wirkstoffmittels in die Trägerflüssigkeit in einer unter Druck stehenden Bypassleitung und die kontinuierliche Einbringung des vorverdünnten Wirkstoffmittels in die Trägerflüssigkeit in der Teilbreite und durch den erfindungsgemäßen Aufbau der Spritzeinrichtung wird eine schnelle Reaktionsfähigkeit auf eine Änderung der ausgebrachten Wirkstoffmittelkonzentration in der Trägerflüssigkeit erreicht und gewährleistet. Entscheidend ist, dass das Wirkstoffmittel sowohl in konzentrierter wie in vorverdünnter Form jeweils in kontinuierlicher Weise in die Trägerflüssigkeit eingespeist und kontinuierlich eingemischt wird.

Weitere Einzelheiten der Erfindung sind den übrigen Unteransprüchen, der Beispielsbeschreibung und den Zeichnungen zu entnehmen. Hierbei zeigen
- Fig. 1: den Flüssigkeitsletungsplan eines landwirtschaftlichen Spritzgerätes in schematischer Darstellung und
- Fig. 2: einen weiteren Flüssigkeitsleitungsplan eines landwirtschaftlichen Spritzgerätes in schematischer Darstellung.

Das als Feldspritze ausgebildete landwirtschaftliche Spritzgerät zum Ausbringen von Spritzmitteln weist einen Vorratstank 1 auf, in dem sich die Trägerflüssigkeit, vornehmlich Wasser befindet. Von dem Vorratstank 1 führt eine Saugleitung 2 zu einer von einer Kraftquelle angetriebenen Pumpe 3. Die Ausgangsleitung 4 der Pumpe 3 führt zu der als Spritzdruckregler 5 ausgebildeten Dosierarmatur. Von dem Spritzdruckregler 5 führt eine Rücklaufleitung 6 in den Vorratstank 1 zurück. Über die Dosierarmatur wird die Fördermenge, die über die Spritzdüsen 7 des Spritzgestänges ausgebracht wird, eingestellt. Der überschüssige Trägerflüssigkeitsvolumenstrom wird über die Rücklaufleitung 6 in Vorratstank 1 zurück geleitet. Die Dosierarmatur 5, welches beispielsweise als 3-Wegeventil ausgebildet ist, ist im geschlossenen Druckregelkreis angeordnet, um in allen Betriebssituationen den optimalen Arbeitspunkt der Düsen 7 im Hinblick auf Spritzkegel und Tropfengröße zu gewährleisten.

Die von der Dosierarmatur 5 kommende Trägerflüssigkeitsleitung 8 verzweigt sich an der Stelle 9, die sich in der Nähe des Spritzgestänges befindet in einzelne Teilbreitenleitungen 10, die jeweils zu einer Teilbreite des Spritzgestänges und der dort angeordneten Spritzdüsen 7 führt. Hinter der Verzweigung 9 der Hauptträgerflüssigkeitsdruckleitung 8 ist in jeder Teilbreitenleitung 10 ein Teilbreitenventil 11 angeordnet. -Hinter dem Teilbreitenventil 11 ist in jeder Teilbreite eine Mischkammer 12 im Bereich des Spritzgestänges angeordnet. Von dieser Mischkammer 12 aus führt jede Teilbreitenleitung 10 zu den einzelnen an dem Spritzgestänge angeordneten Spritzdüsen. Diesen Spritzdüsen 7 kann ein Düsenventil 13 zugeordnet sein, über welche die Flüssigkeitszufuhr zu jeder Spritzdüse 7 separat absperrbar ist.

Jedem auszubringendem Wirkstoffmittel 14 ist eine eigene Dosierpumpe 15, 16 zugeordnet, die jeweils von einem Motor 17 angetrieben wird. Die Wirkstoffmittelpumpen 15, 16 sind als einstellbare Pumpen ausgebildet und können im Ausführungsbeispiel mittels eines manuellen Verstellmechanismus von Hand eingestellt werden. Von der von der Trägerflüssigkeitspumpe 3 kommenden Druckleitung 4 zweigt vor dem Dosierventil 5 an der Verzweigstelle 18 eine Bypassleitung 19 ab. Diese unter Druck stehende und mit Trägerflüssigkeit gefüllte Bypassleitung 19 führt zu dem als wasserhydraulischen Motor ausgebildeten Antriebsmotor 17 für den Antrieb der Wirkstoffmittelpumpen 15, 16. Somit ist ein volumenstrom-proportionaler Antrieb für den wasserhydraulischen Motor 17 in der Trägerflüssigkeit führenden Bypassleitung 19 eingebaut, dessen Abtrieb gleichzeitig die beiden Wirkstoffmittelpumpen 15, 16 mit manueller Verstellung antreibt. Es können aber auch mit gleichem Resultat Elektromotoren oder ölhydraulische Motoren verwendet werden, die von einem Trägerflüssigkeitsvolumenstromsensor geführt werden.

Über den Handverstellungsmechanismus der Wirkstoffmittelpumpen 15, 16 wird vor Arbeitsbeginn die Aufwandmenge des Wirkstoffmittels fest eingestellt. Die während der Anwendung veränderlichen Parameter, wie Fahrgeschwindigkeit und Teilbreiten- bzw. Einfeldüsenschaltung und im Falle der teilfächendifferenzierten Bewirtschaftung - der örtliche Bedarf bewirken über die Steuerung 25 eine Verstellung der Proportionaleblende 24 und damit eine Anpassung des Volumenstroms der Wirkstoffpumpen 15, 16.

In die unter Druck stehende Bypassleitung münden vor dem Antriebsmotor 17 die jeweils die von den Wirkstoffmittelpumpen 15, 16 kommende Wirkstoffmittelleitungen 20, 21 über eine Einschleusstelle 22 ein. An dieser Stelle 22 erfolgt die Vormischung bzw. Vorverdünnung der jeweiligen Wirkstoffmittel mit der sich in der Bypassleitung 19 befindenden und unter Druck stehenden Trägerflüssigkeit, hier Wasser. Durch die Durchleitung der Trägerflüssigkeit in der Bypassleitung 19 und der eingeschleusten Wirkstoffmitteln in den Leitungen 20 und 21 über die weiterführende Bypassleitung 19'durch den Antriebsmotor 17 werden diese in dem Antriebsmotor gut miteinander vermischt. Hinter dem Antriebsmotor 17 teilt sich die Bypassleitung 19' über ein Zweigleitungsstück 23 jeweils in die zu den in den Teilbreiten-Trägerflüssigkeitsleitungen 10 angeordneten Mischkamnfern 12 führenden Teilbypassleitungen 19" auf. In jeder Teilbreitenbypassleitung 19" ist ein einstellbares Ventil 24, im Ausführungsbeispiel eine einstellbare Proportionalblende angeordnet. In dem als Bypassleitung 19, 19', 19", ausgebildeten Nebenstrom wird das Wirkstoffmittel zunächst zu einer Vormischung aufbereitet und dann in einer Mischkammer 12 der Teilbreitenleitungen 10 mit der Trägerflüssigkeit zur endgültigen Spritzbrühe vermischt. Die Vormischung weist eine Wirkstoffmittelkonzentration auf, die an den Verstellpumpen 15, 16 einstellbar und proportional zu den Wirkstoffmittelaufwendungen sind. Die Verstellpumpen 15, 16 werden zur Erzeugung der Vormischung vor der Anwendung von Hand eingestellt, wahrend die jeweilige Proportionalblende 24 die veränderlichen Parameter während der Anwendung verarbeitet, in dem sie den Volumenstrom der Vormischung zur jeweiligen Teilbreite anpassen.

Die Proportionalblenden 24 werden, wie dargestellt, über eine elektronische Steuerung 25 entsprechend angesteuert.

Bei dieser Anordnung wird auch die besondere Stärke des Konstantendrucksystems für die Trägerflüssigkeit deutlich: trotz der durch die Verstellblenden 24 wechselnden Vormischungsvolumenströme über die als Nebenschluss dienenden Bypassleitungen 19, 19'19" sorgt die Druckregelung durch die Dosierarmatur 5 für die Trägerflüssigkeit ohne weitere steuerungstechnische Eingriffe für eine Verringerung des Trägerflüssigkeitsvolumenstroms über die Hauptleitung8 , so dass sich-schließlich die Teilströme zu dem für die Düsen 7 gewünschten optimalen Gesamtvolumenstrom addieren.

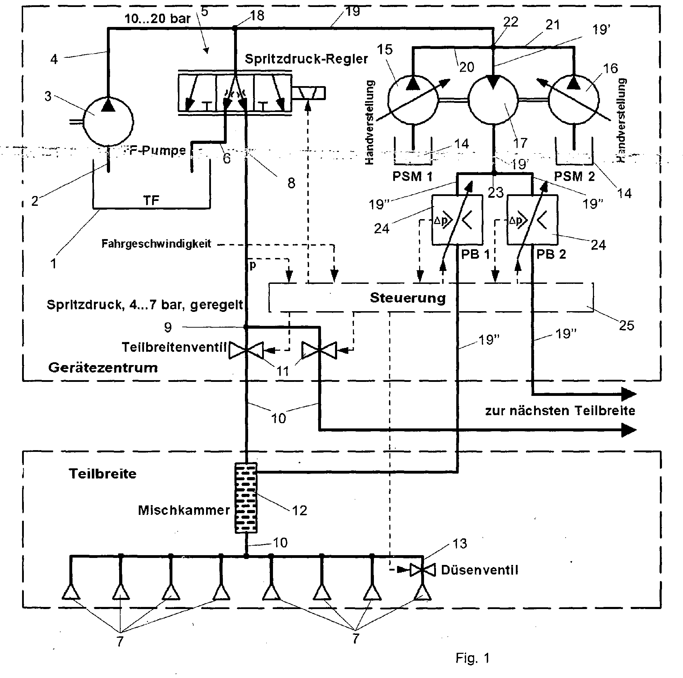

In der in Fig. 1 dargestellten Anordnung, bei der die Mischkammer 12 auf der Teilbreite sitzt und jeder Teilbreite eine eigene Proportionalblende 24 zugeordnet ist, lässt sich auch bereits eine gewisse Teilflächenspezifizierung bei der Ausbringung des Wirkstoffmittels erreichen, in dem die Ausbringmenge aller Wirkstoffmittel zusammen an jeder Teilbreite unabhängig verstellt werden können. Da die Konzentration in jeder Vormischungsleitung 19" allein durch die Einstellung der Verstellpumpen 15, 16 bestimmt ist, erzeugt nur die Schlauchführung in der Teilbreite hinter der Mischkammer 12 einen Zeitverzug: bei Verstellung der Proportionalblende 24 wird der zur Mischkammer 12 fließende und sich vermischende Vormischungsvolumenstrom unverzögert verändert. Für die Einstellung der exakten Dosierung ist die genaue Kenntnis der Volumenströme der Vormischung notwendig. Diese Messung kann über separate, hier nicht dargestellte Durchflusssensoren erfolgen. Eine wesentlich wirtschaftlichere und technisch einfachere Methode, wie in Fig. 1 dargestellt, ist die hier dargestellte Messung der Druckdifferenz, die zusammen mit dem Öffnungsquerschnitt der Blende 24 und deren Kalibrierkennfeldern sehr genaue Messergebnisse liefert. Hierzu sind entsprechende Kennfelder in dem Speicher der elektronischen Steuerungs- und Regeleinrichtung 25 hinterlegt.

Von der Steuerung 25 aus kann durch die Ansteuerung des jeweiligen Teilbreitenventils 11 jede Teilbereite entsprechend der jeweils erforderlichen Arbeitsbreite zu- oder abgeschaltet werden. Ebenfalls ist es, wie angedeutet, über die elektronische Steuerung 25 möglich, über die den einzelnen Düsen 7 zugeordneten Düsenventile 13 (von denen nur eins dargestellt ist) diese anzusteuern, so dass jede einzelne Düse 7 entsprechend abgesperrt oder zugeschaltet werden kann, so dass entsprechend der Spritzbreite einer Düse 7 die tatsächliche Ausbringbreite verändert werden kann.

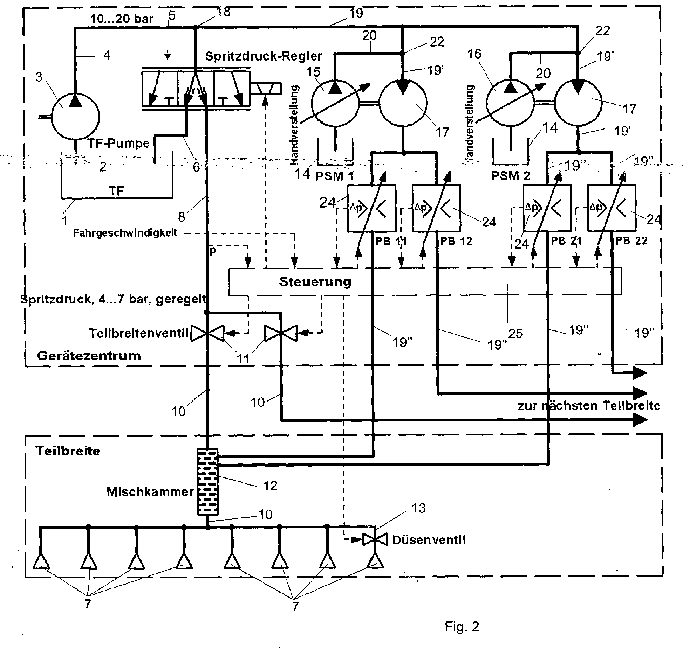

Die Darstellung gemäß Fig. 2 unterscheidet sich von dem Ausführungsbeispiel gemäß Fig. 1 im wesentlichen dadurch, dass jeder Wirkstoffmittelpumpe 15, 16 ein eigener Antriebsmotor 17 zugeordnet ist, sowie jede Wirkstoffmittelvorschmischungs-Bypassleitung 19' separate Einstellventile 24, im Ausführungsbeispiel einstellbar Proportionalblenden 24, die unabhängig voneinander ansteuerbar sind, zugeordnet ist. Hierdurch wird ein vollständiger Funktionsumfang zur teilflächenspezifischen Direkteinspeisung erreicht. Für jedes Wirkstoffmittel 14 wird also eine eigene Dosierverstellpumpe 15, 16 bereitgestellt, der für jede Teilbreite eine Verstellblende 24 nachgeschaltet ist.

Als Ergebnis entsteht ein System, dass jeder Teilbreite je eine Vormischung für jedes Wirkstoffmittel zuleitet, so dass an jeder Teilbreite jedes Wirkstoffmittel separat dosierbar ist. Da zudem durch die auf den Teilbreiten untergebrachten Mischkammern 12 sehr kleine Verzögerungen entstehen, ist mit diesem System die am weitesten gehende Form der teilflächenspezifischen Ausbringung möglich. Um zu gewährleisten, dass nach Möglichkeit nur geringe vorgemischte Wirkstoffmittelmengen bei Beendigung der Ausbringarbeit noch in den Leitungen 19', 19", 12 vorhanden sind, muss durch die Steuerung 25 sichergestellt werden, dass mit Kenntnis der Volumenströme und der Schlauchvolumina die Zudosierung der Wirkstoffmittel genau zu dem Zeitpunkt vor Ende der Anwendung gestoppt wird, dass die in den Schläuchen befindlichen Restmengen zur Behandlung der Restfläche genau ausreichen. Bildlich gesprochen schiebt die Trägerflüssigkeit die Spritzbrühen bzw. Vormischung sowohl in der Teilmischungsbypassleitung wie auch in den Teilbreiten vor sich her, bis die Leitung bis zur Spritzdüse 7 diesbezüglich leer sind. Voraussetzung dafür sind natürlich jeweils zumindest annähernd gleiche Schlauchvolumina in allen die Teilbreiten versorgenden Stränge.

Die Füllung funktioniert unter diesen Voraussetzungen nach dem gleichen Prinzip umgekehrt: die leeren bzw. mit Trägerflüssigkeit der letzten Anwendung gefüllten Leitungen in die Peripherie werden zunächst durch nachdrückende Spritzbrühe bzw. Vormischungen gefüllt, mit Kenntnis der Volumenströme der Schlauchvolumina genau so lange, dass als Ergebnis vor den Düsen die neue Spritzbrühe ansteht.

## Patentansprüche

1. Spritzeinrichtung zum Ausbringen von Flüssigkeiten, insbesondere für landwirtschaftliche Zwecke, mit einer einem Fahrzeug zugeordneten und mit Spritzdüsen (7) ausgestatten Spritzbalkenanordnung mit zumindest einer quer zur Fahrtrichtung verlaufenden Flüssigkeitsleitung, die in Abständen mit Spritzdüsen (7) versehen ist, wobei die Flüssigkeiten den Spritzdüsen (7) über die zumindest eine Flüssigkeitsleitung (4) jeweils von zumindest einer die Trägerflüssigkeit fördernden und den Spritzdruck erzeugenden Pumpe (3) und zumindest einer zumindest ein Wirkstoffmittel fördernden und an zumindest einer Stelle in die Trägerflüssigkeit in dosierender Weise einspeisende Pumpe (15,16,17) in einstellbarer Menge zuführbar sind, wobei zumindest ein Wirkstoffmittel zunächst zur Vorverdünnung in zumindest eine unter Druck stehende Bypassleitung (19,19') der Trägerflüssigkeit mittels zumindest einer Pumpe (15,16,17) einspeisbar ist, wobei die zumindest das zumindest eine mit der Trägerflüssigkeit vorverdünnte und unter Druck stehende Wirkstoffmittel enthaltende Bypassleitung (19',19") in die zumindest eine zu den Spritzdüsen (7) führende Trägerflüssigkeitsleitung (10) mündet, wobei an der Stelle, an der die Bypassleitung (19") in die Trägerflüssigkeitsleitung (10) einmündet, in der Trägerflüssigkeitsleitung (10) eine Mischkammer (12) angeordnet ist; **dadurch gekennzeichnet, dass** die unter Druck stehende Bypassleitung (19,19') in Strömungsrichtung gesehen hinter der die Trägerflüssigkeit fördernden und den Spritzdruck erzeugenden Pumpe (3) von der Flüssigkeitsleitung (4) abzweigt und auch hinter dieser Pumpe in die zumindest eine zu den Spritzdüsen (7) führende Trägerflüssigkeitsleitung (10) mündet.

2. Spritzeinrichtung nach Anspruch 1, **dadurch gekennzeichnet, dass** in jeder Bypassleitung (19,19') eine Vorrichtung (24) angeordnet ist, mit der die Strömungsmenge in der Bypassleitung (19', 19") verstellt werden kann.

3. Spritzeinrichtung nach Anspruch 2, **dadurch gekennzeichnet, dass** die Vorrichtung zur Verstellung der Strömungsmenge ein einstellbares Durchflussventil (24) ist.

4. Spritzeinrichtung nach einem oder mehreren der vorstehenden Ansprüche, **dadurch gekennzeichnet, dass** in der Bypassleitung (19') eine von dem in der Bypassleitung (19') strömenden Flüssigkeitsstrom (19') angetriebene Kraftmaschine (17) angeordnet ist, dass die Kraftmaschine (17) zumindest ein Wirkstoff fördernde und in die Bypassleitung (19,19') einspeisende Pumpe (15,16) antreibt.

5. Spritzeinrichtung nach einem oder mehreren der Ansprüche 1 bis 4, **dadurch gekennzeichnet, dass** die Pumpe (15,16) mit einem Elektromotor angetrieben wird, dass in der Bypassleitung (19' ,19") ein Strömungssensor angeordnet ist und dass mit Hilfe des Sensors die Motordrehzahl und damit die Pumpmenge der zugeordneten Pumpe eingestellt werden kann.

6. Spritzeinrichtung nach einem oder mehreren der vorstehenden Ansprüche 1 bis 4, **dadurch gekennzeichnet, dass** die einen Wirkstoff fördernde und in die Bypassleitung (19,19') einspeisende Pump in einer Weise arbeitet, dass der von der Pumpe geförderte Wirkstoffvolumenstrom proportional zum in der Bypassleitung (19', 19") strömenden Trägerflüssigkeitsvolumenstrom ist.

7. Spritzeinrichtung nach einem oder mehreren der vorstehenden Ansprüchen, **dadurch gekennzeichnet, dass** in die jeweils von der Wirkstoff fördernden Pumpe (15,16) kommende Wirkstoffleitung (20) vor oder hinter dem Antriebsmotor (17) in die Bypassleitung (19,19') einmündet.

8. Spritzeinrichtung nach einem der vorstehenden Ansprüche, **dadurch gekennzeichnet, dass** die Bypassleitung (19) sich hinter dem Antriebsmotor oder dem Durchflusssensor und der Einspeisestelle der zumindest einen Wirkstoffleitung in die Bypassleitung (19) auf eine der Anzahl der Teilbreiten (10) der Spritzbalkenanordnung entsprechende Anzahl von Teilbypassleitungen (19") aufteilt, dass die Trägerflüssigkeitsleitung (10) sich vor jeder Teilbreite der Spritzbalkenanordnung in zugeordnete Teilbreitenleitungen (10) aufteilt, dass jeweils eine Teilbypassleitung (19") in einer in der Teilbreitenträgerflüssigkeitsleitung (10) angeordneten Mischkammer (12) einmündet, und dass in jeder Teilbreitenbypassleitung (19") ein einstellbares Durchflussventil (24) angeordnet ist.

9. Spritzeinrichtung nach einem oder mehreren der vorstehenden Ansprüche, **dadurch gekennzeichnet, dass** die in der Teilbreitenbypassleitung (19") angeordneten Durchflussventile (24) als einstellbare Blenden ausgebildet sind.

10. Spritzeinrichtung nach einem oder mehreren der vorstehenden Ansprüche, **dadurch gekennzeichnet, dass** die in der Teilbreitenbypassleitung (19") angeordneten Durchflussventile (24) als Proportionalblenden oder -drosseln ausgebildet sind.

11. Spritzeinrichtung nach einem oder mehreren der vorstehenden Ansprüche, **dadurch gekennzeichnet, dass** die in den Bypassleitungen (19,19',19") oder den Teilbreitenbypassleitungen (19") angeordneten Durchflussventile (24) über eine elektronische Steuereinrichtung (25) in Abhängigkeit des in der Trägerflüssigkeitsleitung herrschenden Drucks und/oder in Abhängigkeit eines Weg- oder Fahrgeschwindigkeitsignals der sich über der Bodenoberfläche bewegten Spritzeinrichtung und/oder in Abhängigkeit vom jeweils aktuellen, auf die bearbeite Bodenfläche bezogenen Bedarf an Wirkstoffmittel einstellbar sind.

## Claims

1. Spraying device for discharging liquids, in particular for agricultural purposes, having a spray beam arrangement which is assigned to a vehicle and is equipped with spray nozzles (7) and has at least one liquid line which runs transversally with respect to the direction of travel and is provided with spray nozzles (7) at intervals, wherein the liquid can be fed in an adjustable quantity to the spray nozzles (7) via the at least one liquid line (4) in each case by at least one pump (3) which delivers the carrier liquid and produces the spray pressure and at least one pump (15, 16, 17) which delivers at least one active substance and feeds same into the carrier liquid and at least one point in a metered manner, wherein at least one active substance can be fed, first of all for pre-dilution, into at least one pressurized bypass line (19, 19') of the carrier liquid by means of at least one pump (15, 16, 17), wherein the at least one bypass line (19', 19") which is prediluted with the carrier liquid and contains pressurized active substances opens into the at least one carrier liquid line (10) leading to the spray nozzles (7), wherein a mixing chamber (12) is arranged in the carrier liquid line (10) at the point at which the bypass line (19") opens into the carrier liquid line (10); **characterized in that** the pressurized bypass line (19, 19') branches off from the liquid line (4), as seen in the flow direction, behind the pump (3) delivering the carrier liquid and producing the spray pressure and also opens behind the said pump into the at least one carrier liquid line (10) leading to the spray nozzles (7).

2. Spraying device according to Claim 1, **characterized in that** a device (24) with which the flow quantity in the bypass line (19', 19") can be adjusted is arranged in each bypass line (19, 19').

3. Spraying device according to Claim 2, **characterized in that** the device for adjusting the flow quantity is an adjustable flow valve (24).

4. Spraying device according to one or more of the preceding claims, **characterized in that** a power motor (17) which is driven by the liquid flow (19') flowing in the bypass line (19') is arranged in the bypass line (19'), **in that** the power motor (17) drives at least one pump (15, 16) delivering active substance and feeding same into the bypass line (19, 19').

5. Spraying device according to one or more of the Claims 1 to 4, **characterized in that** the pump (15, 16) is driven by an electric motor, **in that** a flow sensor is arranged in the bypass line (19', 19"), and **in that** the rotational speed of the motor and therefore the pumping quantity of the associated pump can be set with the aid of the sensor.

6. Spraying device according to one or more of the preceding Claims 1 to 4, **characterized in that** the pump delivering an active substance and feeding same into the bypass line (19, 19') operates in such a manner that the volumetric flow of active substance delivered by the pump is proportional to the volumetric flow of carrier liquid flowing in the bypass line (19', 19").

7. Spraying device according to one or more of the preceding claims, **characterized in that** an active substance line (20) coming into the in each case from the pump (15, 16) delivering active substance opens into the bypass line (19, 19') in front of or behind the drive motor (17).

8. Spraying device according to one of the preceding claims, **characterized in that** the bypass line (19) is divided behind the drive motor or the flow sensor and the feeding point of the at least one active substance line into the bypass line (19) between a number of partial bypass lines (19"), the number corresponding to the number of partial widths (10) of the spray beam arrangement, **in that** the carrier liquid line (10) is divided before each partial width of the spray beam arrangement into associated partial width lines (10), **in that** in each case one partial bypass line (19") opens into a mixing chamber (12) arranged in the partial width carrier liquid line (10), and **in that** an adjustable flow valve (24) is arranged in each partial width bypass line (19").

9. Spraying device according to one or more of the preceding claims, **characterized in that** the flow valves (24) arranged in the partial width bypass line (19") are designed as adjustable restrictors.

10. Spraying device according to one or more of the preceding claims, **characterized in that** the flow valves (24) arranged in the partial width bypass line (19") are designed as proportional restrictors or proportional throttles.

11. Spraying device according to one or more of the preceding claims, **characterized in that** the flow valves (24) arranged in the bypass lines (19, 19', 19") or in the partial width bypass lines (19") are adjustable via an electronic device (25) depending on the pressure prevailing in the carrier liquid line and/or depending on a travel or driving speed signal of the spraying device moving over the soil surface and/or depending on the respectively current requirement of active substances based on the cultivated area of soil.

## Revendications

1. Dispositif de pulvérisation pour délivrer des liquides, en particulier à des fins agricoles, comprenant un agencement de poutre de pulvérisation associé au véhicule et pourvu de buses de pulvérisation (7) avec au moins une ligne de liquide s'étendant transversalement à la direction de conduite, qui est pourvue de buses de pulvérisation (7) espacées, les liquides pouvant être acheminés en quantité ajustable aux buses de pulvérisation (7) par le biais de l'au moins une ligne de liquide (4) à chaque fois depuis au moins une pompe (3) refoulant le liquide vecteur et générant la pression de pulvérisation et au moins une pompe (15, 16, 17) refoulant une substance active et l'injectant de manière dosée à au moins un emplacement dans le liquide vecteur, au moins une substance active pouvant être d'abord injectée en vue d'une pré-dilution dans au moins une ligne de dérivation sous pression (19, 19') au liquide vecteur au moyen d'au moins une pompe (15, 16, 17), la ligne de dérivation (19', 19") contenant au moins l'au moins une substance active prédiluée avec le liquide vecteur et sous pression débouchant dans l'au moins une ligne de liquide vecteur (10) conduisant aux buses de pulvérisation (7), une chambre de mélange (12) étant disposée dans la ligne de liquide vecteur (10) à l'endroit auquel la ligne de dérivation (19") débouche dans la ligne de liquide vecteur (10) ;
**caractérisé en ce que**
la ligne de dérivation sous pression (19, 19'), vu dans la direction d'écoulement, part de la ligne de liquide (4) derrière la pompe (3) refoulant le liquide vecteur et générant la pression de pulvérisation et débouche également derrière cette pompe dans l'au moins une ligne de liquide vecteur (10) conduisant aux buses de pulvérisation (7).

2. Dispositif de pulvérisation selon la revendication 1, **caractérisé en ce qu'**un dispositif (24), avec lequel la quantité d'écoulement dans la ligne de dérivation (19', 19") peut être ajustée, est disposé dans chaque ligne de dérivation (19, 19').

3. Dispositif de pulvérisation selon la revendication 2, **caractérisé en ce que** le dispositif d'ajustement de la quantité d'écoulement est une vanne de débit ajustable (24).

4. Dispositif de pulvérisation selon l'une quelconque ou plusieurs des revendications précédentes, **caractérisé en ce qu'**une machine motrice (17) entraînée par le courant de liquide (19') s'écoulant dans la ligne de dérivation (19') est disposée dans la ligne de dérivation (19'), **en ce que** la machine motrice (17) entraîne une pompe (15, 16) refoulant au moins une substance active et l'injectant dans la ligne de dérivation (19, 19').

5. Dispositif de pulvérisation selon l'une quelconque ou plusieurs des revendications 1 à 4, **caractérisé en ce que** la pompe (15, 16) est entraînée par un moteur électrique, **en ce qu'**un capteur d'écoulement est disposé dans la ligne de dérivation (19', 19"), et **en ce qu'**à l'aide du capteur, le régime du moteur, et par conséquent la quantité de pompage de la pompe associée, peuvent être ajustés.

6. Dispositif de pulvérisation selon l'une quelconque ou plusieurs des revendications précédentes 1 à 4, **caractérisé en ce que** la pompe refoulant une substance active et l'injectant dans la ligne de dérivation (19, 19') fonctionne de telle sorte que le débit volumique de substance active refoulé par la pompe soit proportionnel au débit volumique de liquide vecteur s'écoulant dans la ligne de dérivation (19', 19").

7. Dispositif de pulvérisation selon l'une quelconque ou plusieurs des revendications précédentes, **caractérisé en ce que** dans la ligne de substance active (20) provenant à chaque fois depuis la pompe (15, 16) refoulant la substance active débouche avant ou derrière le moteur d'entraînement (17) dans la ligne de dérivation (19, 19').

8. Dispositif de pulvérisation selon l'une quelconque des revendications précédentes, **caractérisé en ce que** la ligne de dérivation (19), derrière le moteur d'entraînement ou le capteur de débit et le point d'injection de l'au moins une ligne de substance active dans la ligne de dérivation (19), se divise en un certain nombre de lignes de dérivation partielles (19") correspondant au nombre des largeurs partielles (10) de l'agencement de poutre de pulvérisation, **en ce que** la ligne de liquide vecteur (10) se divise avant chaque largeur partielle de l'agencement de poutre de pulvérisation, en lignes de largeurs partielles associées (10), **en ce qu'**à chaque fois une ligne de dérivation partielle (19") débouche dans une chambre de mélange (12) disposée dans la ligne de liquide vecteur de largeur partielle (10) et **en ce que** dans chaque ligne de dérivation de largeur partielle (19") est disposée une vanne de débit ajustable (24).

9. Dispositif de pulvérisation selon l'une quelconque ou plusieurs des revendications précédentes, **caractérisé en ce que** les vannes de débit (24) disposées dans la ligne de dérivation de largeur partielle (19") sont réalisées sous forme de diaphragmes ajustables.

10. Dispositif de pulvérisation selon l'une quelconque ou plusieurs des revendications précédentes, **caractérisé en ce que** les vannes de débit (24) disposées dans la ligne de dérivation de largeur partielle (19") sont réalisées sous forme de diaphragmes ou de papillons proportionnels.

11. Dispositif de pulvérisation selon l'une quelconque ou plusieurs des revendications précédentes, **caractérisé en ce que** les vannes de débit (24) disposées dans les lignes de dérivation (19, 19', 19") ou les lignes de dérivation de largeurs partielles (19") peuvent être ajustées par le biais d'un dispositif de commande électronique (25) en fonction de la pression régnant dans la ligne de liquide vecteur et/ou en fonction d'un signal de vitesse de déplacement ou de vitesse de conduite du dispositif de pulvérisation déplacé sur la surface du sol et/ou en fonction du besoin en substance active actuel respectif rapporté à la surface du sol travaillée.
